# EUROPÄISCHE PATENTSCHRIFT

(11) **EP 1 852 588 B1**
(45) Veröffentlichungstag und Bekanntmachung des Hinweises auf die Patenterteilung: **11.05.2011**
(21) Anmeldenummer: 07006520.6
(22) Anmeldetag: 29.03.2007
(51) Int. Cl.: F02B 37/12

(54) **Ladedruckregler für Abgas- Turbolader von Brennkraftmotoren für Automobile**
Load pressure regulator for exhaust gas turbo charger of combustion engines for automobiles
Régulateur de pression de suralimentation pour turbosoufflante et turbocompresseur de moteurs à combustion interne pour automobile

(30) Priorität: 04.05.2006 DE 102006021130
(43) Veröffentlichungstag der Anmeldung: 07.11.2007
(73) Patentinhaber: smk systeme metall kunststoff gmbh & co. kg., 70794 Filderstadt-Plattenhardt (DE)
(72) Erfinder: Wortmann, Frank, 73765 Neuhausen (DE); Bahm, Klaus, 76703 Kraichtal/Menzingen (DE)
(74) Vertreter: Twelmeier, Ulrich

(56) Entgegenhaltungen:
- EP-A- 1 445 494
- WO-A-01/14750
- DE-A1- 10 027 668
- DE-C1- 3 623 677
- DE-U- 7 424 147
- DE-U1-202004 009 313
- DE-U1-202005 017 296
- FR-A- 2 192 261

## Beschreibung

Die Erfindung geht von einem Ladedruckregler mit den im Oberbegriff des Anspruchs 1 angegebenen Merkmalen aus. Ein solcher Ladedruckregler ist aus dem DE 20 2005 017 296 U bekannt. Ein Ladedruckregler ist ein pneumatischer Aktuator, der mit Unterdruck oder Überdruck beaufschlagt wird. Durch die Druckbeaufschlagung bewegt sich eine Stange, die als Regelstange bezeichnet wird, und betätigt z. B. ein Ventil, wozu relativ große Kräfte bis zu 350 N übertragen werden.

Herkömmliche Ladedruckregler, die mit Überdruck betätigt werden sollen, sind so aufgebaut, dass sie beim Beaufschlagen mit Überdruck die Regelstange ausfahren. Herkömmliche Ladedruckregler, welche durch Unterdruck betätigt werden sollen, ziehen die Regelstange üblicherweise ein, wenn sie mit Unterdruck betätigt werden.

Der vorliegenden Erfindung liegt die Aufgabe zugrunde, einen preisgünstigen, einfach aufgebauten und leicht zusammenzubauenden Ladedruckregler zu schaffen, welcher die Regelstange ausfährt, wenn er mit Unterdruck beaufschlagt wird.

Diese Aufgabe wird gelöst durch einen Ladedruckregler mit den im Anspruch 1 angegebenen Merkmalen. Vorteilhafte Weiterbildungen der Erfindung sind Gegenstand der Unteransprüche.

Der erfindungsgemäße Ladedruckregler hat
eine Dose, welche von einem Deckel abgedeckt ist,
eine flexible erste Membrane, welche mit ihrem äußeren Rand zwischen dem äußeren Rand der Dose und dem Deckel eingespannt ist,
eine Regelstange, welche abgedichtet aus der Dose herausgeführt ist, so dass ihr eines Ende in der Dose und ihr anderes Ende außerhalb der Dose liegt,
ein Stützteil für die erste Membran, welches als Membranteller ausgebildet ist, fest mit der Regelstange verbunden ist und der ersten Membran anliegt,
eine Feder, welche das Stützteil beaufschlagt und
einen Anschluss für eine Unterdruckquelle auf der der Feder zugewandten Seite der ersten Membran.
Die Anordnung der flexiblen ersten Membrane, des sie stützenden Stützteils und des Anschlusses für eine Unterdruckquelle ist so getroffen, dass die Regelstange (18) bei Anschließen an eine Unterdruckquelle aus dem Ladedruckregler ausfährt.
Auf der der Regelstange zugewandten Seite der ersten Membrane ist in einem Abstand von dieser eine flexible zweite Membrane vorgesehen ist, welche mit ihrem äußeren Rand an der Dose festgelegt ist, mit ihrem inneren Rand an der Regelstange (18) und/oder an einem Fortsatz der Regelstange anliegt und auf ihrer der ersten Membrane zugewandten Seite unterstützt ist.
In einem Abstand von der zweiten Membrane, und zwar auf ihrer der ersten Membrane abgewandten Seite ist, eine an der Dose angebrachte Führungseinrichtung für die Regelstange vorgesehen.

Das hat Vorteile:
- Die zweite Membran begrenzt flexibel den Raum, welcher sich bei Unterdruck verkleinern soll, und dichtet ihn gleichzeitig ab.
- Die zweite Membran bildet eine dichte Durchführung für die Stange welche mit dem Stützteil der ersten Membran gekoppelt ist, um mit diesem verschoben zu werden.
- Die zweite Membran ist abgestützt und dadurch langlebig.
- Die Druckbelastung der zweiten Membran wird von ihrer Abstützung aufgefangen und unterstützt die Dichtwirkung.
- In Kombination mit der nach außen in einem Abstand anschließenden Führungseinrichtung für die Regelstange ergibt sich der nötige Bewegungsspielraum für die zweite Membran und die Regelstange.
- Die zweite Membran und die Führungseinrichtung können gemeinsam an der Dose befestigt werden.

Es ist der Raum zwischen den beiden Membranen, welcher sich verkleinern soll, wenn er mit Unterdruck beaufschlagt wird. Um das zu erreichen, hat die zweite Membrane einen kleineren Querschnitt als die zwischen der Dose und dem Deckel eingespannte erste Membrane. Die von der zweiten Membrane auf die Regelstange übertragene Gegenkraft ist in diesem Fall hinreichend klein, weil der Radius der Membrane quadratisch in die Gegenkraft eingeht.

Während sich die große, zwischen Dose und Deckel eingespannte erste Membrane in ihrem Außenbereich abrollt, rollt sich die kleinere, zweite Membran vorzugsweise in ihrem inneren Bereich, in unmittelbarer Nachbarschaft der Regelstange ab, wenn die Regelstange verschoben wird.

Die zweite Membran ist mit ihrem äußeren Rand vorzugsweise am Rand des Loches festgelegt, welches sich im Boden der Dose befindet und durch welches auch die Regelstange nach außen führt. An diesem Rand kann die Membran durch Umbördeln des Randes festgelegt sein. Besonders bevorzugt ist es jedoch, den äußeren Rand der zweiten Membran und den äußeren Rand einer Hülse zum Aufnehmen einer Führungseinrichtung, insbesondere einer Buchse, für die Regelstange und auch noch den äußeren Rand einer Zentriervorrichtung für die Feder, welche die erste, größere Membran beaufschlagt, zusammenzufassen und gemeinsam am Rand des Loches festzulegen, welches sich im Boden der Dose befindet. Zu diesem Zweck kann man z. B. den äußeren Rand der zweiten Membran und den äußeren Rand der Zentriervorrichtung zusammenlegen und gemeinsam mit dem Rand der Hülse für die Führungsbuchse umbördeln und dadurch die Hülse, die Zentriervorrichtung und die zweiten Membran zu einer Baueinheit zusammenfassen. Alternativ ist es möglich, den äußeren Rand der Hülse für die Führungsbuchse und den äußeren Rand der zweiten Membran zusammenzulegen und durch Umbördeln des äußeren Randes der Zentriervorrichtung mit dieser zu einer Baueinheit zusammenzufassen. In beiden Fällen kann man den Bördelflansch, der die drei Teile zusammenhält, durch Verschweißen oder Verlöten mit dem Boden der Dose am Rand des Loches festlegen, welches sich im Boden der Dose befindet.

Als Zentriervorrichtung eignet sich besonders ein konischer Ring oder eine konische Hülse, auf den bzw. auf die die als Wendelfeder ausgebildete Feder aufgesteckt werden kann. An der Innenseite des konischen Rings bzw. der konischen Hülse kann sich die zweite, kleinere Membran abstützen und sich an sie anschmiegen und erhält dadurch eine gut definierte Lage, die für einen ungestörten Abrollvorgang günstig ist.

Bei Ladedruckreglern für Abgas-Turbolader besteht die Forderung, die Stellung der Steuerstange zu überwachen. Zu diesem Zweck ist es bekannt, in einen aus Kunststoff bestehenden Deckel des Ladedruckreglers einen Wegsensor zu integrieren, welcher auf der Grundlage von PLCD-Technologie (Permanent-Magnetic Linear Contactless Displacement) arbeitet. Ein solcher Sensor ist in der Lage, eine Verlagerung der Steuerstange berührungslos zu messen. Nachteilig dabei ist, dass solche PLCD-Senoren verhältnismäßig teuer sind, dass man für unterschiedliche Ladedruckregler unterschiedliche Deckel mit und ohne integriertem PLCD-Sensor benötigt.

Es sind auch Ladedruckregler bekannt, bei welchen die Position der Steuerstange mittels eines Hall-Sensors überwacht wird. Wird ein Hall-Sensor in einem Magnetfeld angeordnet und von einem Strom durchflossen, so liefert er eine Ausgangsspannung, die proportional zur magnetischen Feldstärke und zum Strom ist. Koppelt man die Regelstange mit einem Dauermagneten, dann ist dessen Feldstärke am Ort des Hall-Sensors von der Lage der Steuerstange abhängig. Ladedruckregler, welche mit einem Hall-Sensor die Stellung der Regelstange überwachen, haben jedoch den Nachteil, dass die Regelstange sich nicht nur in Richtung ihrer Längsachse bewegt, sondern infolge eines unvermeidlichen Spiels auch radiale Bewegungen und Taumelbewegungen ausführen kann, welche zu einem Fehler in der Lagebestimmung führen, wenn nicht durch besondere konstruktive Maßnahmen der Bewegungsspielraum der Regelstange eingeschränkt wird. Es ist bekannt, den Bewegungsspielraum durch federbelastete Gleitführungen einzuschränken. Diese Führungen sind jedoch schwingungsfähig und werden deshalb im Fahrzeug stets zu Schwingungen angeregt, die im Resonanzfall zu ernsthaften Schäden führen können.

Um dem abzuhelfen, hat der erfindungsgemäße Ladedruckregler in einer bevorzugten Weiterbildung im Deckel eine Öffnung, welche durch einen Einsatz verschließbar ist, in welchem eine Messeinrichtung angeordnet ist, welche auf die Stellung der Regelstange anspricht.

Das hat weitere Vorteile:
- Der Einsatz mit der Messeineinrichtung kann für unterschiedliche Ladedruckregler gleich sein.
- Die dadurch mögliche Standardisierung führt zu geringeren Herstellkosten und zu verringertem Aufwand bei der Lagerhaltung.
- Die Öffnung im Deckel kann durch einen Blindstopfen geschlossen werden, wenn für einen Ladedruckregler eine Messeinrichtung, welche auf die Stellung der Regelstange anspricht, nicht gefordert ist.
- Der Blindstopfen kann ebenso standardisiert sein wie der Einsatz mit der Messeinrichtung.
- Die Standardisierung, für welche die Erfindung eine Voraussetzung schafft, schafft einen kostenmäßigen Spielraum für eine komfortablere Messeinrichtung.
- Die Verwendung eines Einsatzes, in welchem die Messeinrichtung angeordnet ist, macht es möglich, bei einem Versagen der Messeinrichtung lediglich den Einsatz mit der Messeinrichtung anstatt einen kompletten Ladedruckregler auszutauschen.

Vorzugsweise ist der Einsatz koaxial zur Regelstange angeordnet. Das hat den Vorteil, dass ein in der Messeinrichtung vorgesehener Messfühler, welcher auf die Lage der Regelstange anspricht, in der Flucht der Regelstange angeordnet sein kann und dass im Einsatz eine bezüglich der Längsachse der Regelstange symmetrische Sensoranordnung verwirklicht werden kann. Ein Anschluss für eine Überdruckquelle oder für eine Unterdruckquelle, welcher im Stand der Technik im allgemeinen in der Flucht der Regelstange am Deckel vorgesehen ist, kann ohne Nachteil für den Ladedruckregler auch seitlich neben dem Einsatz angeordnet sein.

Als Messeinrichtung eignet sich besonders eine solche, welche berührungslos auf die Stellung der Regelstange anspricht. Als Messfühler, die berührungslos auf die Stellung der Regelstange ansprechen, kommen deshalb sowohl kapazitive Messfühler als auch induktive Messfühler in Frage, z. B. ein PLCD-Sensor. Als berührungslos ansprechende Messfühler kommen aber auch Ultraschall-Entfernungsmesser und Laser-Entfernungsmesser in Frage, wobei letztere den Vorteil haben, dass sie mit einer kleinen Laserdiode und mit der zugehörigen elektronischen Mess- und Auswerteschaltung zu einem kompakten Modul zusammengefasst werden kann. Besonders bevorzugt ist die Verwendung einer Messeinrichtung mit einem Hall-Sensor als Messfühler, welcher hinreichen klein, hinreichend empfindlich und hinreichend beständig gegenüber den am Abgasstrang eines Fahrzeuges auftretenden Bedingungen (hohe Temperatur und Vibrationen) erhältlich ist.

Um die Lage der Regelstange berührungslos erfassen zu können, ist die Regelstange zweckmäßigerweise mit einem Dauermagneten gekoppelt, welcher gemeinsam mit der Regelstange verschiebbar ist. Der Magnet kann unmittelbar am Ende der Regelstange angebracht sein. Vorzugsweise ist er an einem gesonderten Träger angebracht, welcher seinerseits an der Regelstange angebracht ist und sich von der Regelstange in Richtung gegen den Deckel erstreckt. Auf diese Weise kann der Magnet in eine möglichst große Nähe zu der Messeinrichtung gebracht werden, welche sich in dem in den Deckel eingefügten Einsatz befindet.

Insbesondere ist es vorteilhaft, den Magneten so anzuordnen, dass er am Deckel anliegt oder unmittelbar vor dem Deckel liegt, wenn sich die Regelstange in ihrer eingefahrenen Endstellung befindet. In diesem Fall hat man die Möglichkeit, am Ort des Messfühlers der Messeinrichtung eine hohe magnetische Feldstärke und einen hohen Gradienten des magnetischen Feldes infolge der Bewegung der Regelstange zu erzeugen. Das begünstigt die Bildung eines deutlichen Messsignals.

Vorzugsweise ist der Magnet ringförmig ausgebildet, koaxial zur Regelstange angeordnet und in Richtung der Längsachse der Regelstange magnetisiert. Ein solcher rotationssymmetrischer Aufbau passt besonders gut zu einem rotationssymmetrischen Aufbau des Ladedruckreglers, erleichtert den Zusammenbau des Ladedruckreglers und erleichtert das Vermeiden und das Ausgleichen von Lagefehlern.

Um einen solchen günstigen Aufbau zu erreichen, ist der Träger des Magneten zweckmäßigerweise ein längliches, hohles Gebilde, welches eine mit der Längsachse der Regelstange zusammenfallende Längsachse hat. Es könnte sich um ein korbartiges Gebilde handeln, in welchem der Magnet durch einen Kranz von Fingern gehalten ist. Leichter herzustellen, stabiler und einfacher in der Handhabung ist jedoch ein Träger in Gestalt einer Hülse, in welche der ringförmige Magnet eingesetzt ist, vorzugsweise an jenem Ende der Hülse, welches dem Deckel des Ladedruckreglers zugewandt ist.

Besonders bevorzugt ist eine Weiterbildung der Erfindung, bei welcher der Einsatz, welcher die Messeinrichtung enthält, einen Fortsatz hat, welcher sich in der Flucht der Regelstange über die Innenseite des Deckels hinaus in das Innere des Ladedruckreglers erstreckt. In diesem Fortsatz sind vorzugsweise ein oder mehrere Messfühler der Messeinrichtung angeordnet. Der Außendurchmesser des Fortsatzes und der Innendurchmesser des ringförmigen Magneten lassen sich mit Vorteil so aufeinander abstimmen, dass der ringförmige Magnet über den Fortsatz hinweg bewegt werden kann. Ein in dem Fortsatz angeordneter Messfühler hat auf diese Weise einen besonders intensiven Feldkontakt mit dem ringförmigen Magnet. Zugleich kann der Fortsatz verwendet werden, um den ringförmigen Magneten und damit die Regelstange axial zu führen bzw. das radiale Spiel der Regelstange in der Dose des Ladedruckreglers zu begrenzen. Ein weiterer Vorteil dieser Anordnung liegt darin, dass trotz des in den Innenraum des Ladedruckreglers ragenden Fortsatzes die Innenraummaße nicht vergrößert werden müssen und keine Stellkraft verloren geht.

Ein besonderer Vorteil der Erfindung liegt darin, dass ein Einsatz mit einer auf die Stellung der Regelstange ansprechenden Messeinrichtung unverändert sowohl bei einem auf Überdruck als auch bei einem auf Unterdruck ansprechenden Ladedruckregler verwendbar ist, da die Regelstange in beiden Fällen ausgefahren wird.

Vorzugsweise umfasst die Messeinrichtung nicht nur einen, sondern mehrere Hall-Sensoren, insbesondere mehrere gleiche Hall-Sensoren. Damit lassen sich weitere Vorteile erreichen:

Bewegt man einen Magneten über einen Hall-Sensor hinweg, erhält man ein sinusförmiges oder sinusähnliches Ausgangssignal, welches über einen Teilbereich des Sinus linear von dem Weg abhängt, den der Magnet zurücklegt, bzw. linearisierbar ist. Der Bereich, in welchem ein linear vom Weg des Magneten abhängendes Signal vorliegt, kann dadurch verlängert werden, dass man zwei oder mehr als zwei Hall-Sensoren in der Flucht der Regelstange so anordnet, dass sich die linearen Abschnitte ihrer Ausgangssignale überlappen. Dann befindet sich der Magnet, der die Stellung der Regelstange angibt, stets im linearen Messbereich eines der Hall-Sensoren.

Ein weiterer Vorteil wird erreicht, wenn zwei gleiche Hall-Sensoren auf gegenüberliegenden Seiten der Längsachsen der Regelstange spiegelbildlich zueinander angeordnet und so geschaltet sind, dass sich ihre Ausgangssignale addieren. Lageänderungen des Magneten, welche durch radiales Spiel der Regelstange verursacht werden, führen in diesem Fall nicht zu Fehlmessungen, denn wenn sich der Magnet, welcher die Anordnung der Hall-Sensoren umgibt, radial aus seiner Solllage herausbewegt, dann führt das in einem der Hallsensoren zu einem größeren Signal und gleichzeitig in dem anderen Hallsensor zu einem kleineren Signal, aber die Summe der beiden Signale bleibt im wesentlichen gleich und ist - wie gewünscht - ein Maß führ die axiale Stellung des Magneten und damit für die axiale Stellung der Regelstange. Bei dieser Weiterbildung der Erfindung wirkt sich die koaxiale Anordnung des Magneten und des Einsatzes mit den Hall-Sensoren besonders vorteilhaft aus, weil sie nicht nur leicht zu montieren, sondern auch unempfindlich gegen ein Radialspiel der Regelstange ist und über den Verschiebeweg der Regelstange ein hinreichend lineares Positionssignal liefert.

In einer bevorzugten Weiterbildung der Erfindung ist die Anordnung der ersten flexiblen Membrane, des sie stützenden Stützteils und der Anschlüsse für eine Überdruckquelle bzw. für eine Unterdruckquelle so getroffen, dass in beiden Fällen die Regelstange aus dem Ladedruckregler ausfährt, also sowohl beim Anschließen an eine Überdruckquelle als auch beim Anschließen an eine Unterdruckquelle. Das hat den weiteren Vorteil, dass ein - und - derselbe Ladedruckregler unverändert sowohl für einen Anwendungsfall, in dem er an eine Unterdruckquelle angeschlossen werden soll, als auch für einen Anwendungsfall verwendet werden kann, in dem er an eine Überdruckquelle angeschlossen werden soll.

Ausführungsbeispiele der Erfindung sind in den Zeichnungen dargestellt. Gleiche oder einander entsprechende Teile sind mit übereinstimmenden Bezugszahlen bezeichnet.
- Figur 1: zeigt einen ersten Ladedruckregler in einem Längsschnitt,
- Figur 2: zeigt die Signale zweier Hallsensoren in Abhängigkeit vom Weg der Regelstange, und
- Figur 3: zeigt eine Abwandlung des Ladedruckreglers aus Figur 1 in einem Längsschnitt.

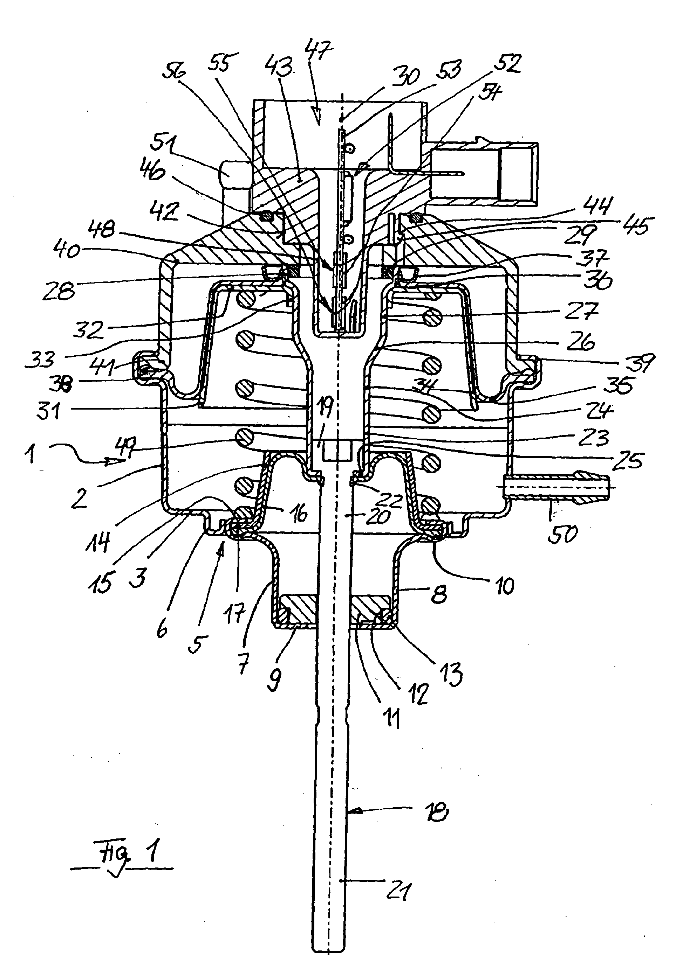

Der in Figur 1 dargestellte Ladedruckregler hat eine Dose 1 mit einer annähernd zylindrischen oder schwach konischen Umfangswand 2 und mit einem Boden 3. Die Dose 1 besteht vorzugsweise aus Metall und kann z. B. durch Tiefziehen aus Blech gebildet sein. In der Mitte des Bodens 3 befindet sich ein kreisrundes Loch 5, welches von einem Hals 6 umgeben ist, welcher im Radialschnitt U-förmig ausgebildet ist, was ihm eine erhöhte Formstabilität verleiht. Der Hals 6 kann durch einen Bördelvorgang gebildet sein.

Eine erste Hülse 7 hat einen zylindrischen Hauptteil 8, welcher einerseits durch einen radial einwärts gerichteten Flansch 9 und andererseits durch einen radial auswärts gerichteten Flansch 10 begrenzt ist. Bei der ersten Hülse 7 handelt es sich vorzugsweise ebenfalls um ein Tiefziehteil aus Blech. In der ersten Hülse 7 ist am radial einwärts gerichteten Flansch 9 eine Führungsbuchse 11 angeordnet, welche vorzugsweise aus einer Scheibe aus einem hochtemperaturbeständigen Kunststoff oder aus einer Keramik besteht. Auf ihrer Außenseite hat die Führungsbuchse 11 eine ringförmige Ausnehmung 12, welche zum Flansch 9 und zur Umfangswand des Hauptteils 8 offen ist und einen O-Ring 13 aufnimmt, welcher den Spalt zwischen der Hülse 7 und der Umfangswand des Hauptteils 8 überbrückt und die Führungsbuchse 11 begrenzt nachgebend und schwingungsdämpfend in der ersten Hülse 7 fixiert. Die Lage der Führungsbuchse 11 kann durch Eindrücken der sie aufnehmenden Hülse 7 gesichert sein.

Ein konischer Zentrierring 14 hat einen radial nach außen gerichteten Flansch 15, welcher am radial nach außen gerichteten Flansch 10 der ersten Hülse 7 festgelegt ist, indem er umgebördelt ist und den Flansch 15 des Zentrierrings 14 umschließt. Eine flexible "zweite" Membrane ist eine Rollmembrane 16, welche aus einem bevorzugt elastomeren Kunststoff geformt ist, hat einen radial nach außen gerichteten Rand 17, welcher zwischen dem Flansch 15 des Zentrierrings 14 und dem radial nach außen gerichteten Flansch 10 der ersten Hülse 7 eingespannt und durch das Bördeln des nach außen gerichteten Flansches 10 festgeklemmt ist. Um ein Herausziehen des äußeren Randes 17 der Rollmembrane 16 aus dem Bördelflansch 10 zu erschweren, ist der äußere Rand 17 verdickt ausgebildet. Auf diese Weise wird beim Herstellen des Bördelflansches 10 eine Taille gebildet, welche die Lage des äußeren Randes 17 der Rollmembrane 16 sichert.

Die Rollmembrane 16 liegt mit ihrem mittleren Abschnitt der konischen Innenseite des Zentrierrings 14 an und erstreckt sich in einem Bogen, dessen konkave Seite der Führungsbuchse 11 zugewandt ist, zum Schaft 20 einer Regelstange 18, welche vorzugsweise als Imbusschraube ausgebildet ist, welche einen Kopf 19, daran anschließend einen zylindrischen Schaft 20 und daran anschließend einen Gewindeabschnitt 21 hat. Die Rollmembran 16 hat ein zentrisches Loch mit einem verdickten inneren Rand 22, welcher in unmittelbarer Nähe des Kopfes 19 der Regelstange 18 dem Schaft 20 mit Vorspannung anliegt oder in eine Ringnut der Regelstange 18 eingreift.

Die Regelstange 18 ist fest mit einer zweiten Hülse 23 verbunden, welche vorzugsweise aus Blech besteht, einen zylindrischen Abschnitt 24 hat, dessen Innendurchmesser mit dem Außendurchmesser des Kopfes 19 der Regelstange 18 übereinstimmt und einen radial einwärts gerichteten Flansch 25 hat, welcher formschlüssig hinter den Kopf 19 greift und dessen Rückseite anliegt. Dem radial einwärts gerichteten Flansch 25 liegt der an den inneren Rand 22 angrenzende Abschnitt der Rollmembran 16 an.

Der zylindrische Abschnitt 24 der zweiten Hülse 23 setzt sich über einen konischen Übergangsabschnitt 26 in einen zylindrischen Abschnitt 27 mit größerem Durchmesser fort, an welchen ein Hals 28 anschließt, dessen Durchmesser gegenüber dem zylindrischen Abschnitt 27 nochmals vergrößert ist. Der Hals 28 umschließt fest einen ringförmigen Magnet 29, welcher eine axiale Magnetisierungsrichtung aufweist, d. h., eine Magnetisierungsrichtung in Richtung der Längsachse 30 der Regelstange 18.

Ein Membranteller 31 hat einen ebenen Boden 32, welcher sich rechtwinklig zur Achse 30 der Regelstange 18 erstreckt und ein zentrales Loch hat, welches durch einen Hals 33 begrenzt ist, welcher dem Abschnitt 27 der zweiten Hülse 23 anliegt, und zwar in unmittelbarer Nachbarschaft des Halses 28. Die Lage des Membrantellers 31 ist auf der zweiten Hülse 23 durch eine Wendelfeder 49 festgelegt. Sie kann auch z. B. durch Verlöten, Verschweißen, Verkleben oder durch Aufpressen des Halses 33 auf die zweite Hülse 23 gesichert sein.

An den ebenen Abschnitt 32 des Membrantellers 31 schließt ein sich konisch erweiternder Abschnitt 34 an, welcher gegen den Boden 3 gerichtet und diesem gegenüber abstandsveränderlich ist. Der Außenseite des Membrantellers 31 liegt eine "erste" Membran 35 an, die aus demselben flexiblen Material wie die Rollmembran 16 bestehen kann und ein zentrales Loch hat, welches durch einen verdickten Rand 36 begrenzt ist, welcher der zweiten Hülse 23 anliegt und dort durch ein ringförmiges Sicherungsblech 37 festgelegt ist, welches im Radialschnitt ein C-förmiges Profil hat. Der innere Rand 36 der ersten Membrane 35 ist zwischen dem Membranteller 31 und dem ringförmigen Sicherungsblech 37 eingespannt. Der Hals 28 der zweiten Hülse 23 ist an seinem Rand nach außen gebördelt und hält das ringförmige Sicherungsblech 37 unverlierbar fest.

Der verdickte äußere Rand 38 der ersten Membrane 35 ist zwischen dem äußeren Rand 39 der Dose 1 und dem äußeren Rand 41 eines Deckels 40 eingespannt, welcher die Dose 1 abdeckt. Der Deckel 40 ist im dargestellten Beispiel ein durch Spritzgießen aus Kunststoff hergestelltes Formteil, könnte jedoch auch aus Metall bestehen. Um den verdickten Rand 38 der ersten Membrane 35 unverlierbar festzulegen, ist der Rand 39 der Dose 1 umgebördelt und umschließt auf diese Weise sowohl den äußeren Rand 38 der ersten Membrane 35 als auch den äußeren Rand 41 des Deckels 40.

Der Deckel 40 hat eine zentrische, abgestufte Öffnung 42, in welche ein Formteil 43 aus Kunststoff eingesetzt ist, welches die Öffnung 42 verschließt. Das Formteil 43 ist zu der abgestuften Öffnung 42 passend abgestuft ausgebildet, greift formschlüssig in die Öffnung 42 ein und ist darin durch Verrasten festgelegt. Zu diesem Zweck ist die Öffnung 42 im Deckel 40 mit mehreren Hinterschnitten 44 versehen, von denen nur einer dargestellt ist. Das Formteil 43 ist mit zu den Hinterschnitten 44 passenden Rasthaken 45 versehen, welche hinter die Hinterschnitte 44 schnappen, wenn das Formteil 43 in die Öffnung 42 des Deckels 40 gesteckt wird. Ein O-Ring 46 dichtet den Spalt zwischen dem Formteil 43 und dem Deckel 40 gegen das Eindringen von Feuchtigkeit ab. Das Formteil 43 könnte auch in den Deckel 40 geschraubt anstatt mit ihm verrastet zu sein.

Das Formteil 43 ist Teil eines Gehäuses mit einem Innenraum 47 und hat einen koaxial zur Regelstange 18 verlaufenden Fortsatz 48, welcher in die zweite Hülse 23 ragt.

Die Wendelfeder 49 ist zwischen dem Membranteller 31 und dem umgebördelten Rand der ersten Hülse 7 eingespannt. Ihr eines Ende wird durch den Zentrierring 14 zentriert und drückt den Membranteller 31 in Richtung gegen den Deckel 40. Dabei nimmt der Membranteller 31 die zweite Hülse 23 mit, bis diese mit ihrem vorderen Rand, an welchem der Magnet 29 angeordnet ist, am Deckel 40 anschlägt. Diese Stellung zeigt die Figur 1.

Es ist die Aufgabe des Ladedruckreglers, mittels der Regelstange 18 auf einen Abgas-turbolader eines Fahrzeugs mit Verbrennungsmotor, insbesondere mit Dieselmotor, einzuwirken. Zu diesem Zweck wird die erste Membrane 35 entweder auf ihrer dem Deckel 40 zugewandten Seite mit einem Überdruck oder auf ihrer der Wendelfeder 49 zugewandten Seite mit einem Unterdruck beaufschlagt. Zu diesem Zweck ist an der Dose 1 ein erster Stutzen 50 zum Anschließen einer Saugleitung vorgesehen, wohingegen am Deckel 40 ein zweiter Stutzen 51 vorgesehen, an welchen eine Überdruckleitung angeschlossen werden kann.

Liegt am Stutzen 50 Unterdruck an, dann drückt die erste Membrane 35 den Membranteller 31 unter Zusammendrücken der Wendelfeder 49 vom Deckel 40 weg, wobei sich der Raum zwischen der ersten Membrane 35 und der Rollmembrane 26 verkleinert. Diese Verkleinerung wird dadurch erreicht, dass sich die erste Membrane 35 von der zweiten Hülse 23 bis zum äußeren Rand der Dose 1 erstreckt, wohingegen sich die Rollmembrane 16 lediglich von der Regelstange 18 bis zum Rand des Loches im Boden 3 der Dose 1erstreckt. Dadurch verdrängt die Rollmembrane 16, wenn sie beim Verschieben der Regelstange 18 am konischen Zentrierring 14 abrollt, ein kleineres Volumen als die erste Membrane 35. Der erforderliche Druckausgleich in der Kammer zwischen der Rollmembrane 16 und der Führungsbuchse 11 erfolgt durch den Führungsspalt zwischen der Führungsbuchse 11 und der Regelstange 18. Der erforderliche Druckausgleich in der Kammer zwischen dem Deckel 40 und der flexiblen ersten Membrane 35 erfolgt durch den offenen zweiten Stutzen 51. Ist an den zweiten Stutzen 51 eine Überdruckleitung angeschlossen, dann bewirkt der Überdruck eine Verschiebung des Membrantellers 31 und der Regelstange 18 vom Deckel 40 weg. Die Kammer zwischen der flexiblen ersten Membrane 35 und der Rollmembrane 16 wird durch den ersten Stutzen 50 entlüftet. Die Kammer zwischen der Rollmembrane 16 und der Führungsbuchse 11 wird durch den Führungsspalt zwischen der Führungsbuchse 11 und der Regelstange 18 entlüftet.

Der Verschiebeweg des Membrantellers 31 hängt vom Druckunterschied ab, der auf den beiden Seiten der ersten Membrane 35 herrscht und findet spätestens sein Ende, wenn der äußere Rand des Membrantellers 31 am Boden 3 der Dose 1 anschlägt. Der Membranteller 31 nimmt die zweite Hülse 23 und mit ihr die Regelstange 18 mit. Um deren Position überwachen zu können, ist in dem Raum 47 des Formteils 43 eine Messeinrichtung 52 vorgesehen, welche die Position der Regelstange 18 berührungslos bestimmen kann. Zu diesem Zweck sind auf einer Leiterplatte 53 vier Hallsensoren 54 vorgesehen, die zu zwei Paaren 55 und 56 zusammengefasst sind, in denen jeweils zwei Hallsensoren deckungsgleich auf der Vorderseite und auf der Rückseite der Leiterplatte 53 angeordnet sind, wobei die beiden Paare 55 und 56 in Längsrichtung der Achse 30 einen Abstand voneinander haben. Bewegt sich der ringförmige Magnet 29 an den Hallsensoren 54 vorbei, so wird in diesen ein Spannungssignal erzeugt, welches sinusförmig oder sinusähnlich vom Weg des Magneten 29 und damit vom Weg der Regelstange 18 abhängt. Die zwei Hallsensoren 54 eines jeden Paares 55 und 56, sind so zusammengeschaltet, dass sich die in ihnen erzeugten Spannungssignale addieren.

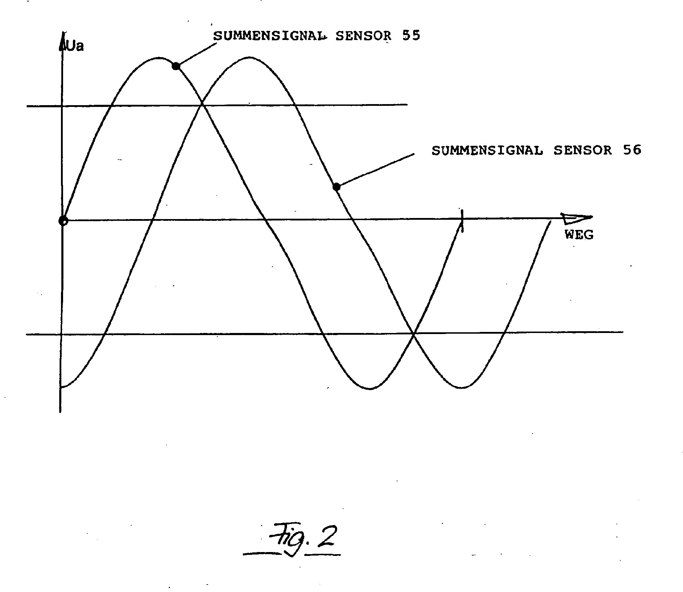

Figur 2 zeigt den Verlauf der Spannungssignale in Abhängigkeit vom Verschiebeweg der Regelstange 18 für die beiden Hallsensor-Paare 55 und 56. Die einigermaßen linearen Bereiche der Sinuskurven der beiden Paare 55 und 56 überlappen sich, so dass immer eines der beiden Paare 55 und 56 benutzt werden kann, um eine lineares Spannung/Weg-Signal zu erhalten. Die erforderliche Signalauswertung erfolgt in einer nicht im Detail dargestellten elektronischen Schaltung, die in dem Raum 47 untergebracht und vorzugsweise mit einem anwendungsspezifischen integrierten Schaltkreis 57 (ASIC) ausgerüstet ist.

Taumelbewegungen der Regelstange 18, die sich in eine Taumelbewegung des ringförmigen Magneten 29 fortsetzen, werden dadurch ausgeglichen, dass die Spannungen der Hallsensoren 54, welche paarweise zusammengefasst sind, addiert werden. Wenn infolge einer Taumelbewegung der radiale Abstand des ringförmigen Magneten 29 von einem Hallsensor eines Paares 55, 56 kleiner wird, wird der radiale Abstand des Magneten vom anderen Hallsensor desselben Paares 55, 56 größer. Folglich wird das Signal des einen Hallsensors höher und dass des anderen Hallsensors kleiner, aber das Summensignal bleibt gleich, so dass der Einfluss eines Radialspiels der Regelstange 18 auf das Messergebnis kompensiert wird. Durch das Anordnen von zwei Paaren 55, 56 von Hallsensoren 54 in einem axialen Abstand hintereinander erreicht man zusätzlich einen hinreichend langen linearen Messbereich für die Positionsbestimmung der Regelstange 18.

Die Anordnung der flexiblen ersten Membran 35 und der Rollmembran 16 ist so getroffen, dass sowohl beim Beaufschlagen des Ladedruckreglers mit Überdruck als auch beim Beaufschlagen des Ladedruckreglers mit Unterdruck die erste Membran 35 stets auf den sie stützenden Membranteller 31 und die Rollmembran 16 auf den sie stützenden konischen Zentrierring 14 drückt. Keine Membran wird jemals abgehoben. Deshalb treten weder Dichtungsprobleme noch besondere Verschleißprobleme auf.

Zum Zusammenbauen des Ladedruckreglers kann man wie folgt vorgehen:
In die zweite Hülse 23 wird der ringförmige Magnet 29 eingesetzt und z. B. durch Kleben oder Verpressen fixiert. Der Membranteller 31 und die Wendelfeder 40 werden bis zum Anschlag auf die Hülse 23 und diese bis zum Anschlag auf die Regelstange 18 geschoben. Die Führungsbuchse 11 wird mit dem O-Ring 13 in die erste Hülse 7 eingesetzt und deren äußerer Rand zur Bildung eines Bördelflansches 10 um den äußeren Rand der Rollmembran 16 und des Zentrierringes 14 herum gebördelt. Die Regelstange wird mit ihrem Schaft 20 durch das Loch der Rollmembran 16 und durch die Führungsbuchse 11 geschoben, bis der innere Rand 22 der Rollmembran 16 am radial einwärts gerichteten Flansch 25 der zweiten Hülse 23 liegt. Dabei wird der Zentrierring 23 in die Wendelfeder 40 eingeführt. Der Bördelflansch 10 wird in den Hals 5 eingefügt, welcher das Loch im Boden 3 der Dose 1 begrenzt und mit dem Hals 5 verschweißt. Die erste Membran 35 wird bis zur Anlage an dem Membranteller 31 auf die zweite Hülse 23 geschoben und durch Aufschieben des Sicherungsblechs 37 gesichert. Der äußere Rand 38 der ersten Membrane 35 wird zwischen den Rand 41 des Deckels 40 und den Rand 39 der Dose 1 eingefügt und durch Bördeln des Randes 39 festgeklemmt, wobei zugleich die Dose 1 und ihr Deckel 40 fest miteinander verbunden werden. Als letztes wird der Einsatz 43 mit der Messeinrichtung in den Deckel 40 gesteckt, bis seine Rasthaken 45 einschnappen. Die meisten Schritte des Zusammenbaus sind Steckvorgänge, was den Zusammenbau vereinfacht und verbilligt.

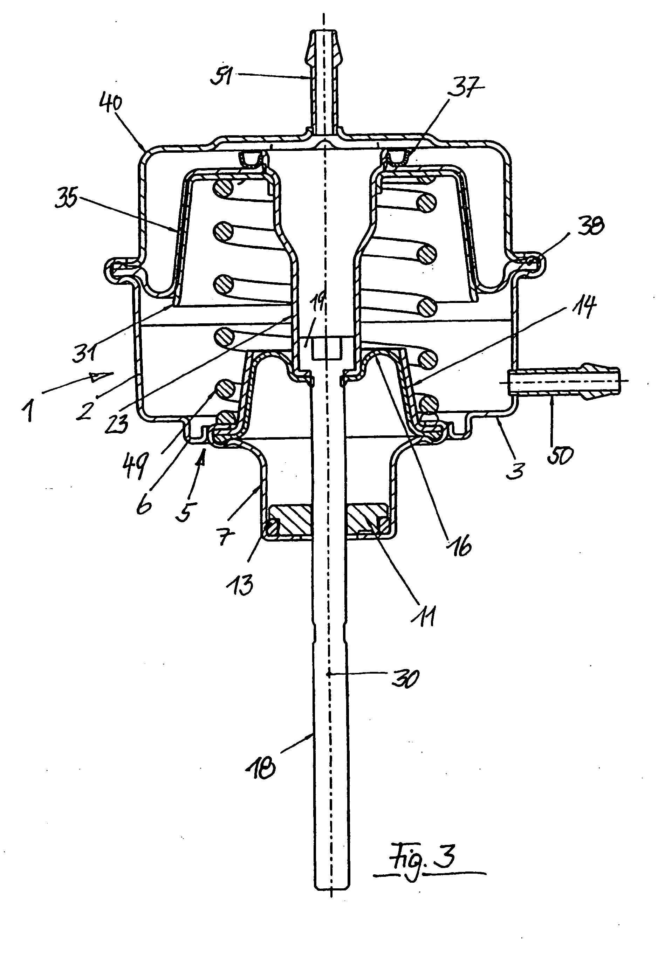

Das in Figur 1 dargestellte Ausführungsbeispiel kann dahingehend abgewandelt werden, dass es keine Messeinrichtung für die Überwachung der Stellung der Regelstange 18 hat. In diesem Fall wird auch kein Gehäuse zum Aufnehmen der Messeinrichtung benötigt. Anstelle des Einsatzes 43 kann in die Öffnung 42 des Deckels 40 in diesem Fall ein Blindstopfen eingefügt werden. Eine andere Abwandlung des Ausführungsbeispiels gemäß Figur 1 ist in Figur 3 dargestellt. In diesem Fall ist anstelle der Kombination aus Deckel 40 und Einsatz 43 ein abgewandelter Deckel 57 vorgesehen, welcher aus Blech besteht und als Tiefziehteil ausgebildet sein kann. Der Deckel 57 enthält einen zweiten Stutzen 51 in zentrischer Anordnung. Der in Figur 3 dargestellte Ladedruckregler kann wie der in Figur 1 dargestellte Ladedruckregler mit Überdruck oder mit Unterdruck betrieben werden. Der Deckel 57 kann statt aus Metall auch aus Kunststoff bestehen. Da eine Messeinrichtung zum Überwachen der Stellung der Regelstange 18 nicht vorgesehen ist, ist in die zweite Hülse 23 auch kein Magnet eingesetzt.

Der Zusammenbau des abgewandelten Ladedruckreglers erfolgt wie beim ersten Ausführungsbeispiel, wobei die Montage des Magneten und des Einsatzes mit der Messeinrichtung entfallen.

### Bezugszeichenliste:

- 1.: Dose
- 2.: Umfangswand
- 3.: Boden
- 4.: konischer Abschnitt
- 5.: Loch
- 6.: Hals
- 7.: Hülse
- 8.: Hauptteil
- 9.: radial einwärts gerichteter Flansch
- 10.: radial auswärts gerichteter Flansch
- 11.: Führungsbuchse
- 12.: Ausnehmung
- 13.: O-Ring
- 14.: Zentrierring
- 15.: Flansch
- 16.: Rollmembran
- 17.: äußerer Rand der Rollmembran
- 18.: Regelstange
- 19.: Kopf
- 20.: Schaft
- 21.: Gewindeabschnitt
- 22.: innerer Rand der Rollmembran
- 23.: Träger, Hülse
- 24.: zylindrischer Abschnitt
- 25.: radial einwärts gerichteter Flansch
- 26.: konischer Übergangsabschnitt
- 27.: zylindrischer Abschnitt
- 28.: Hals
- 29.: Magnet
- 30.: Längsachse
- 31.: Stützteil, Membranteller
- 32.: Boden
- 33.: Hals
- 34.: Abschnitt
- 35.: Membran
- 36.: verdickter innerer Rand der Membrane 35
- 37.: Sicherungsblech
- 38.: äußerer Rand der Membrane 35
- 39.: äußerer Rand der Dose 1
- 40.: Deckel
- 41.: Rand
- 42.: abgestufte Öffnung
- 43.: Einsatz, Formteil
- 44.: Hinterschnitte
- 45.: Rasthaken
- 46.: O-Ring
- 47.: Innenraum
- 48.: Fortsatz
- 49.: Wendelfeder
- 50.: erster Stutzen
- 51.: zweiter Stutzen
- 52.: Messeinrichtung
- 53.: Leiterplatte
- 54.: Hallsensor
- 55.: 1. Paar Hallsensoren
- 56.: 2. Paar Hallsensoren
- 57.: ASIC

## Patentansprüche

1. Ladedruckregler für Abgas-Turbolader von Brennkraftmotoren für Automobile
- mit einer Dose (1), welche von einem Deckel (40) abgedeckt ist,
- mit einer flexiblen ersten Membrane (35), welche mit ihrem äußeren Rand (38) zwischen dem äußeren Rand (39) der Dose (1) und dem Deckel (40) eingespannt ist,
- mit einer Regelstange (18), welche abgedichtet aus der Dose (1) herausgeführt ist, so dass ihr eines Ende (19) in der Dose (1) und ihr anderes Ende außerhalb der Dose (1) liegt,
- mit einem Stützteil (31) für die erste Membran (35), welches fest mit der Regelstange (18) verbunden ist und der ersten Membran (35) anliegt,
- mit einer das Stützteil (31) beaufschlagenden Feder (49),
- und mit einem Anschluss (59) für eine Unterdruckquelle auf der der Feder (49) zugewandten Seite der ersten Membran (35),
**dadurch gekennzeichnet, dass** die Anordnung der flexiblen ersten Membrane (35), des sie stützenden Stützteils (31) und des Anschlusses (59) für eine Unterdruckquelle so getroffen ist, dass die Regelstange (18) bei Anschließen an eine Unterdruckquelle aus dem Ladedruckregler ausfährt,
dass auf der der Regelstange (18) zugewandten Seite der ersten Membrane (35) in einem Abstand von dieser eine flexible zweite Membrane (16) vorgesehen ist, welche mit ihrem äußeren Rand (17) an der Dose (1) festgelegt ist, mit ihrem inneren Rand (22) an der Regelstange (18) und/oder an einem Fortsatz (23) der Regelstange (18) anliegt und auf ihrer der ersten Membrane (35) zugewandten Seite unterstützt ist,
und dass in einem Abstand von der zweiten Membrane (16), und zwar auf ihrer der ersten Membrane (35) abgewandten Seite, eine an der Dose (1) angebrachte Führungseinrichtung (11) für die Regelstange (18) vorgesehen ist.

2. Ladedruckregler nach Anspruch 1, **dadurch gekennzeichnet, dass** die zweite Membrane (16) einen kleineren Querschnitt als die zwischen der Dose (1) und dem Deckel (40) eingespannte erste Membrane (35) hat.

3. Ladedruckregler nach Anspruch 1 oder 2, **dadurch gekennzeichnet, dass** die erste Membran (35) in der Nachbarschaft ihres äußeren Randes (38) abrollt, wohingegen die zweite Membrane, auch als Rollmembran (16) bezeichnet, in dem ihrem inneren Rand (22) benachbarten Bereich abrollt.

4. Ladedruckregler nach einem der Ansprüche 1 bis 3, **dadurch gekennzeichnet, dass** der Außendurchmesser der zweiten Membrane (16) kleiner ist als der Außendurchmesser der zwischen der Dose (1) und dem Deckel (40) eingespannten ersten Membrane (35).

5. Ladedruckregler nach einem der Ansprüche 1 bis 4, **dadurch gekennzeichnet, dass** die zweite Membran (16) am Rand eines Loches (5) festgelegt ist, welches sich im Boden (3) der Dose (1) befindet.

6. Ladedruckregler nach Anspruch 5, **dadurch gekennzeichnet, dass** an dem Rand des Loches (5) zusammen mit dem äußeren Rand (17) der zweiten Membrane (16) eine Hülse (7) zum Aufnehmen der Führungseinrichtung (11) für die Regelstange (18) festgelegt ist.

7. Ladedruckregler nach Anspruch 6, **dadurch gekennzeichnet, dass** die Führungseinrichtung (11) eine Buchse oder eine Scheibe mit einem Führungsloch ist.

8. Ladedruckregler nach Anspruch 6 oder 7, **dadurch gekennzeichnet, dass** die Führungseinrichtung (11) aus einem keramischen Werkstoff besteht.

9. Ladedruckregler nach einem der vorstehenden Ansprüche, **dadurch gekennzeichnet, dass** die zweite Membrane (16) durch einen Ring oder durch eine Hülse (14) unterstützt ist, welche sich in Richtung der Längsachse (30) der Regelstange (18) verengen.

10. Ladedruckregler nach Anspruch 9, **dadurch gekennzeichnet, dass** der die zweite Membran (16) stützende Ring bzw. die Hülse (14) am Boden (3) der Dose (1) angebracht ist.

11. Ladedruckregler nach Anspruch 9 oder 10, **dadurch gekennzeichnet, dass** sich der Ring bzw. die Hülse (14) konisch verengt.

12. Ladedruckregler nach einem der vorstehenden Ansprüche, **dadurch gekennzeichnet, dass** im Boden (3) der Dose (1) zusätzlich eine sich von dem Boden (3) in Richtung zum Deckel (40) erstreckende Zentriervorrichtung (14) für die Feder (49) festgelegt ist.

13. Ladedruckregler nach Anspruch 12, **dadurch gekennzeichnet, dass** die Zentriervorrichtung (14) am Rand des Loches (5) im Boden (3) festgelegt ist.

14. Ladedruckregler nach Anspruch 12 oder 13, **dadurch gekennzeichnet, dass** es die Zentriervorrichtung (14) ist, welche die zweite Membrane (16) stützt.

15. Ladedruckregler nach Anspruch 12, 13 oder 14, **dadurch gekennzeichnet, dass** die Feder (49) auf der Außenseite der Zentriervorrichtung (14) angeordnet ist und dass sich die zweite Membran (16) der Innenseite der Zentriervorrichtung (14) anschmiegt.

16. Ladedruckregler nach einem der vorstehenden Ansprüche, **dadurch gekennzeichnet, dass** er eine Messeinrichtung (52) hat, welche auf die Stellung der Regelstange (18) anspricht.

17. Ladedruckregler nach Anspruch 16, **dadurch gekennzeichnet, dass** die Messeinrichtung (52) eine solche ist, die berührungslos auf die Stellung der Regelstange (18) anspricht.

18. Ladedruckregler nach Anspruch 16 oder 17, **dadurch gekennzeichnet, dass** ein Magnet (29) vorgesehen ist, welcher gemeinsam mit der Regelstange (18) verschiebbar ist, und dass die Messeinrichtung (52) auf die Lage des Magneten (29) anspricht.

19. Ladedruckregler nach Anspruch 18, **dadurch gekennzeichnet, dass** der Magnet an dem in der Dose (1) liegenden Ende (19) der Regelstange (18) angebracht ist.

20. Ladedruckregler nach Anspruch 18, **dadurch gekennzeichnet, dass** der Magnet (29) an einem Träger (23) angebracht ist, welcher an der Regelstange (18) angebracht ist und sich von dieser in Richtung gegen den Deckel (40) erstreckt.

21. Ladedruckregler nach Anspruch 20, **dadurch gekennzeichnet, dass** der Magnet (29) in der einen Endstellung der Regelstange (18), in welcher diese in die Dose (1) eingefahren ist, am Deckel (40) liegt.

22. Ladedruckregler nach einem der Ansprüche 18 bis 21, **dadurch gekennzeichnet, dass** der Magnet (29) ringförmig ausgebildet und koaxial zur Regelstange (18) angeordnet ist.

23. Ladedruckregler nach einem der Ansprüche 18 bis 22, **dadurch gekennzeichnet, dass** der Magnet (29) in Richtung der Längsachse (30) der Regelstange (18) magnetisiert ist.

24. Ladedruckregler nach einem der Ansprüche 20 bis 23, **dadurch gekennzeichnet, dass** der Träger (23) des Magneten (29) ein längliches, hohles Gebilde ist, welches eine mit der Längsachse (30) der Regelstange (18) zusammenfallende Längsachse hat.

25. Ladedruckregler nach Anspruch 24, **dadurch gekennzeichnet, dass** der Träger (23) eine Hülse ist.

26. Ladedruckregler nach einem der Ansprüche 16 bis 25, **dadurch gekennzeichnet, dass** der Deckel (40) eine Öffnung (42) hat welche durch einen Einsatz (43) verschließbar ist, in welchem die Messeinrichtung (52) angeordnet ist.

27. Ladedruckregler nach Anspruch 26, **dadurch gekennzeichnet, dass** der Einsatz (43) einen Fortsatz (48) hat, welcher sich über die Innenseite des Deckels (40) hinaus in Richtung zur Regelstange (18) in das Innere des Ladedruckreglers erstreckt.

28. Ladedruckregler nach Anspruch 27, **dadurch gekennzeichnet, dass** in dem Fortsatz (48) ein Messfühler (54) der Messeinrichtung angeordnet ist.

29. Ladedruckregler nach einem der vorstehenden Ansprüche, **dadurch gekennzeichnet, dass** der Einsatz (43) koaxial zur Regelstange (18) angeordnet ist.

30. Ladedruckregler nach einem der Ansprüche 16 bis 29, **dadurch gekennzeichnet, dass** die Messeinrichtung (52) einen oder mehrere Hallsensoren (54) umfasst.

31. Ladedruckregler nach Anspruch 30, **dadurch gekennzeichnet, dass** zwei gleiche Hallsensoren (54) auf gegenüberliegenden Seiten der Längsachse (30) der Regelstange (18) spiegelbildlich zueinander angeordnet und so geschaltet sind, dass sich ihre Ausgangssignale addieren.

32. Ladedruckregler nach Anspruch 30 oder 31, **dadurch gekennzeichnet, dass** wenigstens zwei Hallsensoren (54) oder Paare (55, 56) von Hallsensoren mit einem gegenseitigen Abstand in Richtung der Längsachse (30) der Regelstange (18) angeordnet sind.

33. Ladedruckregler nach einem der vorstehenden Ansprüche, **dadurch gekennzeichnet, dass** die Anordnung der flexiblen Membrane (35), des sie stützenden Stützteils (31) und des Anschlusses (51) für eine Überdruckquelle so getroffen ist, dass die Regelstange (18) bei Anschließen an einer Überdruckquelle aus dem Ladedruckregler ausfährt.

34. Ladedruckregler nach einem der vorstehenden Ansprüche, **dadurch gekennzeichnet, dass** der innere Rand (22) der zweiten Membrane (16) mittelbar oder unmittelbar an der Rückseite eines Kopfes (19) der Regelstange (18) liegt.

35. Ladedruckregler nach einem der vorstehenden Ansprüche, **dadurch gekennzeichnet, dass** der innere Rand (22) der zweiten Membrane (16) in eine Ringnut der Regelstange (18) eingreift.

## Claims

1. A boost-pressure controller for exhaust-gas turbochargers of internal combustion engines for automobiles, comprising
- a box (1) which is covered by a cover (40),
- a flexible first diaphragm (35) which is clamped by way of the outer edge (38) thereof between the outer edge (39) of the box (1) and the cover (40),
- a control rod (18) extending in a sealed manner out of the box (1), so that one end (19) thereof is located inside the box (1), and the other end thereof is located outside of the box (1),
- a supporting element (31) for the first diaphragm (35), which is securely connected to the control rod (18) and rests against the first diaphragm (35),
- a spring (49) which acts on the supporting element (31),
- and a connector (59) for a vacuum source on the side of the first diaphragm (35) facing the spring (49),
**characterized in that** the flexible first diaphragm (35), the supporting element (31) providing support therefor, and the connector (59) for a vacuum source are arranged such that the control rod (18) moves out of the boost-pressure controller upon connection to a vacuum source,
**in that** a flexible second diaphragm (16) is provided on the side of the first diaphragm (35) facing the control rod (18), at a distance from the first diaphragm, which second diaphragm is attached to the outer edge (17) of the box (1), rests with its inner edge (22) against the control rod (18) and/or against an extension (23) of the control rod (18), and is supported on the side thereof facing the first diaphragm (35),
and **in that** a guiding device (11) for the control rod (18) is provided at a distance from the second diaphragm (16), namely on the side thereof facing away from the first diaphragm (35).

2. The boost-pressure controller according to claim 1, **characterized in that** the second diaphragm (16) has a smaller cross section than does the first diaphragm (35) which is clamped between the box (1) and the cover (40).

3. The boost-pressure controller according to claim 1 or 2, **characterized in that** the first diaphragm (35) unrolls in the vicinity of the outer edge (38) thereof, while the second diaphragm, which is also referred to as a rolling diaphragm (16), unrolls in the region adjacent to the inner edge (22) thereof.

4. The boost-pressure controller according to any of the claims 1 to 3, **characterized in that** the outer diameter of the second diaphragm (16) is smaller than the outer diameter of the first diaphragm (35) which is clamped between the box (1) and the cover (40).

5. The boost-pressure controller according to any of the claims 1 to 4, **characterized in that** the second diaphragm (16) is attached at the edge of a hole (5) located in the base (3) of the box (1).

6. The boost-pressure controller according to claim 5, **characterized in that** a sleeve (7) for accommodating the guiding device (11) for the control rod (18) is attached at the edge of the hole (5) together with the outer edge (17) of the second diaphragm (16).

7. The boost-pressure controller according to claim 6, **characterized in that** the guiding device (11) is a bushing or a washer having a guiding hole.

8. The boost-pressure controller according to claim 6 or 7, **characterized in that** the guiding device (11) is consists of a ceramic material.

9. The boost-pressure controller according to any of the preceding claims, **characterized in that** the second diaphragm (16) is supported by a ring or by a sleeve (14) which tapers in the direction of the longitudinal axis (30) of the control rod (18).

10. The boost-pressure controller according to claim 9, **characterized in that** the ring or sleeve (14) which supports the second diaphragm (16) is attached to the base (3) of the box (1).

11. The boost-pressure controller according to claim 9 or 10, **characterized in that** the ring or sleeve (14) tapers in a conical manner.

12. The boost-pressure controller according to any of the preceding claims, **characterized in that** a centering device (14) for the spring (49), which centering device (14) extends from the base (3) in the direction toward the cover (40), is also attached in the base (3) of the box (1).

13. The boost-pressure controller according to claim 12, **characterized in that** the centering device (14) is attached to the edge of the hole (5) in the base (3).

14. The boost-pressure controller according to claim 12 or 13, **characterized in that** it is the centering device (14) that supports the second diaphragm (16).

15. The boost-pressure controller according to claim 12, 13, or 14, **characterized in that** the spring (49) is disposed on the outer side of the centering device (14), and that the second diaphragm (16) fits tightly against the inner side of the centering device (14).

16. The boost-pressure controller according to any of the preceding claims, **characterized in that** it comprises a measuring device (52) which responds to the position of the control rod (18).

17. The boost-pressure controller according to claim 16, **characterized in that** the measuring device (52) is of the type that responds contactlessly to the position of the control rod (18).

18. The boost-pressure controller according to claim 16 or 17, **characterized in that** there is provided a magnet (29) which is displaceable jointly with the control rod (18), and **in that** the measuring device (52) responds to the position of the magnet (29).

19. The boost-pressure controller according to claim 18, **characterized in that** the magnet is mounted at that end (19) of the control rod (18) which is located inside the box (1).

20. The boost-pressure controller according to claim 18, **characterized in that** the magnet (29) is mounted on a carrier (23) which is attached to the control rod (18) and extends away therefrom in the direction toward the cover (40).

21. The boost-pressure controller according to claim 20, **characterized in that** the magnet (29) rests on the cover (40) in the one end position of the control rod (18), in which the latter is retracted into the box (1).

22. The boost-pressure controller according to any of the claims 18 to 21, **characterized in that** the magnet (29) is annular in form and is disposed coaxially to the control rod (18).

23. The boost-pressure controller according to any of the claims 18 to 22, **characterized in that** the magnet (29) is magnetized in the direction of the longitudinal axis (30) of the control rod (18).

24. The boost-pressure controller according to any of the claims 20 to 23, **characterized in that** the carrier (23) of the magnet (29) is an elongated, hollow body which has a longitudinal axis that coincides with the longitudinal axis (30) of the control rod (18).

25. The boost-pressure controller according to claim 24, **characterized in that** the carrier (23) is a sleeve.

26. The boost-pressure controller according to any of the claims 16 to 25, **characterized in that** the cover (40) has an opening (42) which can be closed by an insert (43), in which the measuring device (52) is disposed.

27. The boost-pressure controller according to claim 26, **characterized in that** the insert (43) has an extension (48) which extends past the inner side of the cover (40) in the direction toward the control rod (18), into the interior of the boost-pressure controller.

28. The boost-pressure controller according to claim 27, **characterized in that** a sensor (54) of the measuring device is disposed in the extension (48).

29. The boost-pressure controller according to any of the preceding claims, **characterized in that** the insert (43) is disposed coaxially to the control rod (18).

30. The boost-pressure controller according to any of the claims 16 to 29, **characterized in that** the measuring device (52) comprises one or more Hall sensors (54).

31. The boost-pressure controller according to claim 30, **characterized in that** two identical Hall sensors (54) are disposed on opposite sides of the longitudinal axis (30) of the control rod (18), as mirror images of one another, and are connected such that the output signals thereof add up.

32. The boost-pressure controller according to claim 30 or 31, **characterized in that** at least two Hall sensors (54) or pairs (55, 56) of Hall sensors are disposed at a distance from one another in the direction of the longitudinal axis (30) of the control rod (18).

33. The boost-pressure controller according to any of the preceding claims, **characterized in that** the flexible first diaphragm (35), the supporting element (31) providing support therefor, and the connector (51) for a vacuum source are arranged such that the control rod (18) extends out of the boost-pressure controller upon connection to a vacuum source.

34. The boost-pressure controller according to any of the preceding claims, **characterized in that** the inner edge (22) of the second diaphragm (16) rests directly or indirectly against the back side of a head (19) of the control rod (18).

35. The boost-pressure controller according to any of the preceding claims, **characterized in that** the inner edge (22) of the second diaphragm (16) engages in an annular groove in the control rod (18).

## Revendications

1. Dispositif de réglage de la pression d'admission pour les turbocompresseurs de moteurs à combustion interne pour automobiles,
- avec une boîte (1) fermée par un couvercle (40),
- avec une première membrane souple (35) serrée par son bord extérieur (38) entre le bord extérieur (39) de la boîte (1) et le couvercle (40),
- avec une tige de réglage (18) sortant de manière étanche de la boîte (1), de sorte que l'une de ses extrémités (19) se trouve dans la boîte (1) et son autre extrémité à l'extérieur de la boîte (1),
- avec une pièce de support (31) pour la première membrane (35), fixement reliée à la tige de réglage (18) et appliquée sur la première membrane (35),
- avec un ressort (49) sollicitant la pièce de support (31),
- et avec un raccord (59) pour une source de sous-pression, du côté de la première membrane (35) qui est tourné vers le ressort (49),
**caractérisé en ce que** l'agencement de la première membrane (35) souple, de la pièce de support (31) qui la soutient et du raccord (59) pour une source de sous-pression est conçu de telle manière, que la tige de réglage (18) sort du dispositif de réglage de la pression d'admission lors du raccordement à une source de sous-pression,
**en ce que** du côté de la première membrane (35) qui est tourné vers la tige de réglage (18), à une distance de celle-ci, il est prévu une deuxième membrane souple (16), qui par son bord extérieur (17) est fixée à la boîte (1), et qui par son bord intérieur (22) est fixée à la tige de réglage (18) et/ou appliquée sur un prolongement (23) de la tige de réglage (18), tout en étant soutenue de son côté tourné vers la première membrane (35),
et **en ce qu'**à une distance de la deuxième membrane (16), en particulier de son côté détourné de la première membrane (35), il est prévu un dispositif de guidage (11), fixé sur la boîte (1), pour la tige de réglage (18).

2. Dispositif de réglage de la pression d'admission selon la revendication 1, **caractérisé en ce que** la deuxième membrane (16) présente une section transversale inférieure à celle de la première membrane (35) serrée entre la boîte (1) et le couvercle (40).

3. Dispositif de réglage de la pression d'admission selon la revendication 1 ou 2, **caractérisé en ce que** la première membrane (35) se déroule à proximité de son bord extérieur (38) tandis que la deuxième membrane, également appelée membrane enroulée (16), se déroule dans la région avoisinant son bord intérieur (22).

4. Dispositif de réglage de la pression d'admission selon l'une des revendications 1 à 3, **caractérisé en ce que** le diamètre extérieur de la deuxième membrane (16) est inférieur au diamètre extérieur de la première membrane (35) serrée entre la boîte (1) et le couvercle (40).

5. Dispositif de réglage de la pression d'admission selon l'une des revendications 1 à 4, **caractérisé en ce que** la deuxième membrane (16) est fixée au bord d'un trou (5) situé dans le fond (3) de la boîte (1).

6. Dispositif de réglage de la pression d'admission selon la revendication 5, **caractérisé en ce qu'**une douille (7) est fixée au bord du trou (5), ensemble avec le bord extérieur (17) de la deuxième membrane (16) pour l'admission du dispositif de guidage (11) pour la tige de réglage (18).

7. Dispositif de réglage de la pression d'admission selon la revendication 5, **caractérisé en ce que** le dispositif de guidage (11) est une bague ou un disque avec un trou de guidage.

8. Dispositif de réglage de la pression d'admission selon la revendication 6 ou 7, **caractérisé en ce que** le dispositif de guidage (11) est constitué d'une matière céramique.

9. Dispositif de réglage de la pression d'admission selon l'une des revendications précédentes, **caractérisé en ce que** la deuxième membrane (16) est soutenue par une bague ou par une douille (14) qui se rétrécit en direction de l'axe longitudinal (30) de la tige de réglage (18).

10. Dispositif de réglage de la pression d'admission selon la revendication 9, **caractérisé en ce que** la bague ou la douille (14) soutenant la deuxième membrane (16) est installée au fond (3) de la boîte (1).

11. Dispositif de réglage de la pression d'admission selon la revendication 9 ou 10, **caractérisé en ce que** la bague ou la douille (14) se rétrécit de manière conique.

12. Dispositif de réglage de la pression d'admission selon l'une des revendications précédentes, **caractérisé en ce qu'**au fond (3) de la boîte (1) est en outre fixé un dispositif de centrage (14) pour le ressort (49), qui s'étend à partir du fond (3), en direction du couvercle (40).

13. Dispositif de réglage de la pression d'admission selon la revendication 12, **caractérisé en ce que** le dispositif de centrage (14) est fixé au bord du trou (5) dans le fond (3).

14. Dispositif de réglage de la pression d'admission selon la revendication 12 ou 13, **caractérisé en ce que** le dispositif de centrage (14) est celui qui soutient la deuxième membrane (16).

15. Dispositif de réglage de la pression d'admission selon la revendication 12, 13 ou 14, **caractérisé en ce que** le ressort (49) est installée du côté extérieur du dispositif de centrage (14), et **en ce que** la deuxième membrane (16) s'applique contre le côté intérieur du dispositif de centrage (14).

16. Dispositif de réglage de la pression d'admission selon l'une des revendications précédentes, **caractérisé en ce qu'**il comporte un dispositif de mesurage (52) sensible à la position de la tige de réglage (18).

17. Dispositif de réglage de la pression d'admission selon la revendication 16, **caractérisé en ce que** le dispositif de mesurage (52) réagit sans contact à la position de la tige de réglage (18).

18. Dispositif de réglage de la pression d'admission selon la revendication 16 ou 17, **caractérisé en ce qu'**il est prévu un aimant (29) déplaçable ensemble avec la tige de réglage (18), et **en ce que** le dispositif de mesurage (52) réagit à la position de l'aimant (29).

19. Dispositif de réglage de la pression d'admission selon la revendication 18, **caractérisé en ce que** l'aimant est fixé à l'extrémité (19) de la tige de réglage (18) qui se trouve dans la boîte (1).

20. Dispositif de réglage de la pression d'admission selon la revendication 18, **caractérisé en ce que** l'aimant (29) est fixé sur un support (23) lui-même fixé à la tige de réglage (18) et s'étendant à partir de celle-ci dans la direction opposée au couvercle (40).

21. Dispositif de réglage de la pression d'admission selon la revendication 20, **caractérisé en ce que** l'aimant (29) repose sur le couvercle (40) sans la position finale de la tige de réglage (18) dans laquelle celle-ci est rentrée dans la boîte (1).

22. Dispositif de réglage de la pression d'admission selon l'une des revendications 18 à 21, **caractérisé en ce que** l'aimant (29) est conçu de forme annulaire et disposé de façon coaxiale à la tige de réglage (18).

23. Dispositif de réglage de la pression d'admission selon l'une des revendications 18 à 22, **caractérisé en ce que** l'aimant (29) est aimanté dans le sens de l'axe longitudinal (30) de la tige de réglage (18).

24. Dispositif de réglage de la pression d'admission selon l'une des revendications 20 à 23, **caractérisé en ce que** le support (23) de l'aimant (29) est un élément creux oblong, possédant un axe longitudinal coïncidant avec l'axe longitudinal (30) de la tige de réglage (18).

25. Dispositif de réglage de la pression d'admission selon la revendication 24, **caractérisé en ce que** le support (23) est une douille.

26. Dispositif de réglage de la pression d'admission selon l'une des revendications 16 à 25, **caractérisé en ce que** le couvercle (40) possède une ouverture (42) susceptible d'être fermée par une pièce d'insertion (43), dans laquelle est installé le dispositif de mesurage (52).

27. Dispositif de réglage de la pression d'admission selon la revendication 26, **caractérisé en ce que** la pièce d'insertion (43) possède un prolongement (48) s'étendant sur le côté intérieur du couvercle (40) et au-delà en direction de la tige de réglage (18), à l'intérieur du dispositif de réglage de la pression d'admission.

28. Dispositif de réglage de la pression d'admission selon la revendication 27, **caractérisé en ce qu'**une sonde de mesure (54) du dispositif de mesurage est installée dans le prolongement (48).

29. Dispositif de réglage de la pression d'admission selon l'une des revendications précédentes, **caractérisé en ce que** la pièce d'insertion (43) est disposée de façon coaxiale à la tige de réglage (18).

30. Dispositif de réglage de la pression d'admission selon l'une des revendications 16 à 29, **caractérisé en ce que** le dispositif de mesurage (52) comprend un ou plusieurs capteurs à effet Hall (54).

31. Dispositif de réglage de la pression d'admission selon la revendication 30, **caractérisé en ce que** deux capteurs à effet Hall (54) identiques sont disposés symétriquement sur des côtés opposés de l'axe longitudinal (30) de la tige de réglage (18), et montés de manière à ce que leurs signaux de sortie s'additionnent.

32. Dispositif de réglage de la pression d'admission selon la revendication 30 ou 31, **caractérisé en ce que** les au moins deux capteurs à effet Hall (54) ou paires (55, 56) de capteurs à effet Hall sont installés avec un espacement mutuel dans le sens de l'axe longitudinal (30) de la tige de réglage (18).

33. Dispositif de réglage de la pression d'admission selon l'une des revendications précédentes, **caractérisé en ce que** l'agencement de la membrane souple (35), de la pièce de support (31) qui la soutient et du raccord (51) pour une source de sous-pression est conçu de telle manière, que la tige de réglage (18) sort du dispositif de réglage de la pression d'admission lors du raccordement à une source de sous-pression.

34. Dispositif de réglage de la pression d'admission selon l'une des revendications précédentes, **caractérisé en ce que** le bord intérieur (22) de la deuxième membrane (16) repose directement ou indirectement sur la face arrière d'une tête (19) de la tige de réglage (18).

35. Dispositif de réglage de la pression d'admission selon l'une des revendications précédentes, **caractérisé en ce que** le bord intérieur (22) de la deuxième membrane (16) s'introduit dans une rainure annulaire de la tige de réglage (18).
